# EUROPEAN PATENT APPLICATION

(11) **EP 2 320 160 A1**
(43) Date of publication of application: **11.05.2011**
(21) Application number: 09808073.2
(22) Date of filing: 20.08.2009
(51) Int. Cl.: F25B 1/00, F25B 11/02

(54) **FREEZE CYCLING DEVICE**

(30) Priority: 22.08.2008 JP 2008214326
(71) Applicant: Panasonic Corporation, Kadoma-shi Osaka 571-8501 (JP)
(72) Inventor: OGATA, Takeshi, Osaka-shi, Osaka 540-6207 (JP); TAKAHASHI, Yasufumi, Osaka-shi, Osaka 540-6207 (JP); MATSUI, Masaru, Osaka-shi, Osaka 540-6207 (JP); WADA, Masanobu, Osaka-shi, Osaka 540-6207 (JP); HIKICHI, Takumi, Osaka-shi, Osaka 540-6207 (JP)
(74) Representative: Ehlers, Jochen
(86) International application number: PCT/JP2009/003978
(87) International publication number: WO 2010/021137

(57) **Abstract**

A refrigeration cycle apparatus (100A) includes a first compressor (101) that is an expander-compressor unit, a second compressor (102), and a controller (300). The controller (300) shifts, when an oil level S1 of a first oil pool (13) becomes equal to or lower than a specified level L, to an oil-equalizing operation in which a rotation speed of a first motor (12) is decreased only by a specified decrement and a rotation speed of a second motor (12) is increased by a specified increment, and an opening of a bypass valve (70) is increased so that a pressure or a temperature of a discharged refrigerant guided to a radiator (4) through a first pipe (3a) is kept approximately constant, and returns the rotation speeds of the first motor (11) and the second motor (12) as well as the opening of the bypass valve (70) to conditions before start of the oil-equalizing operation when a specified period of time has elapsed since the start of the oil-equalizing operation.

## Description

### TECHNICAL FIELD

The present invention relates to a refrigeration cycle apparatus used for water heaters, air conditioners, etc., having an expansion mechanism and compression mechanisms.

### BACKGROUND ART

In recent years, for the purpose of further enhancing the efficiencies of refrigeration cycle apparatuses, there have been proposed power recovery type refrigeration cycle apparatuses having an expansion mechanism instead of an expansion valve, in which the expansion mechanism recovers the pressure energy as power during a process in which a refrigerant is expanded, and thus the electric power required for driving the compression mechanism is reduced by the amount of the power recovered. Such refrigeration cycle apparatuses uses an expander-compressor unit in which a motor, a compression mechanism, and an expansion mechanism are coupled by a shaft.

Since the compression mechanism is coupled to the expansion mechanism by the shaft in the expander-compressor unit, there may be a case where the displacement of the compression mechanism is insufficient or a case where the displacement of the expansion mechanism is insufficient, depending on the operational conditions. In order to ensure adequate recovery power so that the COP (Coefficient of Performance) of the refrigeration cycle apparatus is kept high even under operational conditions where the displacement of the compression mechanism is insufficient, there also have been proposed refrigeration cycle apparatuses using a secondary compressor in addition to the expander-compressor unit (see Patent Literature 1, for example). In this refrigeration cycle apparatus, the secondary compressor is operated so that the high pressure in a refrigeration cycle is a specified target value.

FIG. 10 is a configuration diagram showing the refrigeration cycle apparatus described in Patent Literature 1. As shown in FIG. 10, the refrigeration cycle apparatus using an expander-compressor unit 220 and a secondary compressor 230 includes a refrigerant circuit 210 and a controller 250 serving as a control device. In the refrigerant circuit 210, a first compression mechanism 221 of the expander-compressor unit 220 is disposed in parallel with a second compression mechanism 231 of the secondary compressor 230 between an indoor heat exchanger 211 and an outdoor heat exchanger 212. The first compression mechanism 221 is coupled to a motor 222 and an expansion mechanism 223 by a shaft, and the second compression mechanism 231 is coupled to a motor 232 by a shaft.

The controller 250 controls the secondary compressor 230 so that the high pressure in the refrigeration cycle is a specified target value. Specifically, if the measured value of a high pressure Ph is larger than the target value, the controller 250 reduces the amount of discharge from the second compression mechanism 231 by decreasing the rotation speed of the motor 232. Conversely, if the measured value of the high pressure Ph is lower than the target value, it increases the amount of discharge from the second compression mechanism 231 by increasing the rotation speed of the motor 232.

Accordingly, even under operational conditions where the displacement only of the first compression mechanism 221 is insufficient, it is possible to compensate for the shortage of the displacement by driving the second compression mechanism 231. Thus, it is possible to continue the operation of the refrigeration cycle apparatus while keeping the COP high.

Meanwhile, for higher output of a refrigeration cycle apparatus, there also is a refrigeration cycle apparatus using a plurality of compressors. For example, Patent literature 2 discloses a refrigeration cycle apparatus as shown in FIG. 11. This refrigeration cycle apparatus includes a refrigerant circuit 310 in which two compressors 320, 330 are disposed in parallel with each other. An oil to be used for lubricating and sealing the sliding parts of the compression mechanism is accumulated inside the compressors 320 and 330. Such a refrigeration cycle apparatus has problems in the context of reliability and efficiency if the amount of the oil held in each of the compressors 320, 330 is unbalanced. In order to solve this problem, the refrigeration cycle apparatus disclosed in Patent Literature 2 has a configuration to balance the amounts of oils held in the compressors 320, 330 with each other.

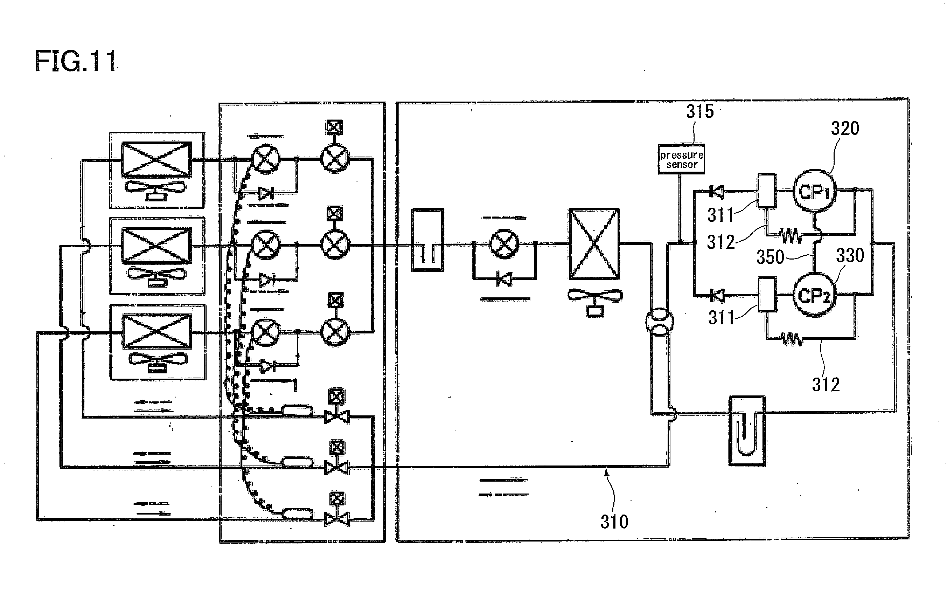

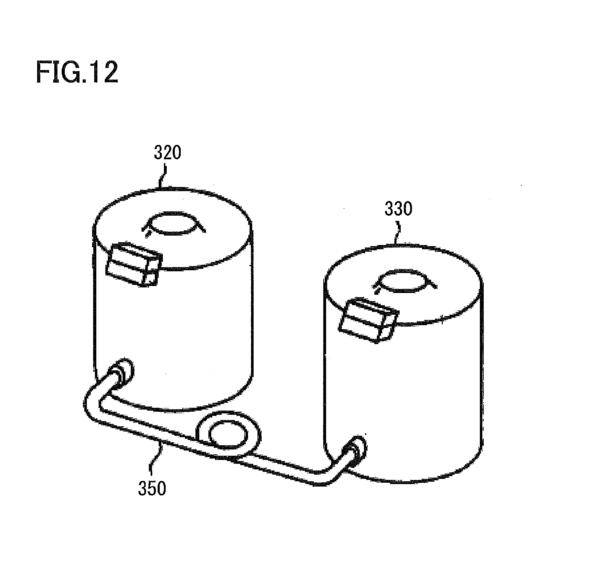

That is, as shown in FIG. 11, pipes on the refrigerant discharge side of the compressors 320, 330 are provided with oil separators 311, respectively, and oil bypass pipes 312 extend from the oil separators 311 to the pipes on the refrigerant suction side of the compressors 320, 330, respectively. Moreover, as shown in FIG. 12, lower portions of the compressors 320, 330 are coupled to each other by an oil-equalizing pipe 350 so that the oil can flow between the compressors 320, 330 through the oil-equalizing pipe 350. Furthermore, a pipe on the high pressure side of a refrigeration cycle is provided with a pressure sensor 315.

During the operation of the two compressors 320, 330, the following operation is performed as an oil-equalizing operation.

First, the operation frequency of the compressor 320 is stepped up by a particular value, and the operation frequency of the other compressor 330 is decreased until a set period of time ta elapses so that a pressure Pd detected by the pressure sensor 315 does not vary. When the set period of time ta has elapsed, the operation frequency of the compressor 320 is stepped down by a particular value, and the operation frequency of the other compressor 330 is increased until the same set period of time ta elapses so that the pressure Pd detected by the pressure sensor 315 does not vary. Then, when the set period of time ta has elapsed again, the operation frequencies of the compressors 320, 330 are returned to the original operation frequencies. Every time the set period of time tb has elapsed, the above-mentioned oil-equalizing operations of step up and step down are repeated.

In this way, by coupling the compressors 320, 330 to each other by the oil-equalizing pipe 350 as well as increasing and decreasing the operation frequencies of the compressors 320, 330 alternately during the operation of the two compressors 320, 330, the oils held in the compressors 320 and 330 are allowed to flow therebetween through the oil-equalizing pipe 350 efficiently, so that the amounts of oils held in the compressors 320, 330 are balanced with each other.

### CITATION LIST

### Patent Literature

PTL1:JP 2004-212006 A
PTL 2: JP 1(1989)-127865 A

### SUMMARY OF INVENTION

### Technical Problem

However, even when an attempt is made to balance the amounts of oils by coupling the expander-compressor unit 220 and the secondary compressor 230 to each other by an oil-equalizing pipe in the power-recovery type refrigeration cycle apparatus of Patent literature 1 shown in FIG. 10 and performing an oil-equalizing operation as described in Patent literature 2, a sufficient oil-equalizing effect cannot be achieved because the expander-compressor unit 220 and the secondary compressor 230 are fluid machines asymmetrical to each other. That is, compared to the secondary compressor 230 in which the second compression mechanism 231 is the only rotation machine, the expander-compressor unit 220 includes the expansion mechanism 223 in addition to the first compression mechanism 221 and thus uses a larger amount of oil. Therefore, even if the operation frequencies are increased and decreased alternately for every certain period of time, the amount of oil held in the expander-compressor unit 220 is decreased and the oil may not be supplied sufficiently to the sliding parts of the compression mechanism or the expansion mechanism. As a result, the reliability decreases.

Moreover, when the operation frequency of the expander-compressor unit 220 is changed, the rotation speed of the expansion mechanism 223 also changes, causing a problem in that the high pressure in the refrigeration cycle deviates from an optimal pressure and the COP decreases.

The present invention has been accomplished in view of the foregoing. It is an object of the present invention to enhance the reliability while suppressing the decrease in COP of a refrigeration cycle apparatus including an expansion mechanism and compression mechanisms.

### Solution to Problem

In order to achieve the above-mentioned object, the inventors of the present invention focused their attention on the fact that the amount of oil in the expander-compressor unit serving as a first compressor tends to decrease and the amount of oil in the second compressor tends to increase, and thought that it may be possible to maintain appropriately both of the amounts of oils in the first compressor and the second compressor by sensing or estimating the amount of oil in the first compressor and switching the rotation speeds of the first compressor and the second compressor. In addition, they thought that it may be possible to keep the high pressure in the refrigeration cycle at an optimal high pressure by providing the refrigeration cycle apparatus with a bypass passage for bypassing the expansion mechanism or an injection passage for supplying additionally the refrigerant to the expansion mechanism in an expansion process, with each passage having a valve, and by adjusting an opening of the valve, even when the rotation speeds of the first compressor and the second compressor are switched. The present invention has been accomplished from this view point.

More specifically, the present invention provides a refrigeration cycle apparatus including:
a first compressor including a first compression mechanism for compressing a refrigerant, an expansion mechanism for recovering mechanical power from the refrigerant expanding, a first motor coupled to the first compression mechanism and the expansion mechanism by a first shaft, and a first closed casing that accommodates the first compression mechanism, the expansion mechanism, and the first motor and has, in a bottom portion thereof, a first oil pool;
a second compressor including a second compression mechanism for compressing the refrigerant, the second compression mechanism being connected in parallel with the first compression mechanism in a refrigerant circuit, a second motor coupled to the second compression mechanism by a second shaft, a second closed casing that accommodates the second compression mechanism and the second motor and has, in a bottom portion thereof, a second oil pool;
a radiator for radiating heat from the refrigerant discharged from the first compression mechanism and the second compression mechanism;
an evaporator for evaporating the refrigerant discharged from the expansion mechanism;
a first pipe for guiding the refrigerant from the first compression mechanism and the second compression mechanism to the radiator;
a second pipe for guiding the refrigerant from the radiator to the expansion mechanism;
a third pipe for guiding the refrigerant from the expansion mechanism to the evaporator;
a bypass passage extending from the second pipe to the third pipe while bypassing the expansion mechanism;
an opening-adjustable bypass valve provided in the bypass passage; and
a controller that shifts, when an oil level of the first oil pool becomes equal to or lower than a specified level, to an oil-equalizing operation in which a rotation speed of the first motor is decreased and a rotation speed of the second motor is increased, and an opening of the bypass valve is increased so that a pressure or a temperature of the discharged refrigerant guided to the radiator through the first pipe is kept approximately constant, and returns the rotation speeds of the first motor and the second motor as well as the opening of the bypass valve to conditions before start of the oil-equalizing operation when a specified period of time has elapsed since the start of the oil-equalizing operation.

The present invention also provides a refrigeration cycle apparatus including:
a first compressor including a first compression mechanism for compressing a refrigerant, an expansion mechanism for recovering mechanical power from the refrigerant expanding, a first motor coupled to the first compression mechanism and the expansion mechanism by a first shaft, and a first closed casing that accommodates the first compression mechanism, the expansion mechanism, and the first motor and has, in a bottom portion thereof, a first oil pool;
a second compressor including a second compression mechanism for compressing the refrigerant connected in parallel with the first compression mechanism in a refrigerant circuit, a second motor coupled to the second compression mechanism by a second shaft, a second closed casing that accommodates the second compression mechanism and the second motor and has, in a bottom portion thereof, a second oil pool;
a radiator for radiating heat from the refrigerant discharged from the first compression mechanism and the second compression mechanism;
a first pipe for guiding the refrigerant from the first compression mechanism and the second compression mechanism to the radiator;
a second pipe for guiding the refrigerant from the radiator to the expansion mechanism;
an injection passage, branched from the second pipe, for supplying additionally the refrigerant to the expansion mechanism in an expansion process;
an opening-adjustable injection valve provided in the injection passage; and
a controller that shifts, when an oil level of the first oil pool becomes equal to or lower than a specified level, to an oil-equalizing operation in which a rotation speed of the first motor is decreased and a rotation speed of the second motor is increased, and an opening of the injection valve is increased so that a pressure or a temperature of the discharged refrigerant guided to the radiator through the first pipe is kept approximately constant, and returns the rotation speeds of the first motor and the second motor as well as the opening of the injection valve to conditions before start of the oil-equalizing operation when a specified period of time has elapsed since the start of the oil-equalizing operation.

### Advantageous Effects of Invention

The above-mentioned configuration makes it possible to decrease the rotation speed of the first motor of the first compressor and increase the rotation speed of the second motor of the second compressor automatically at a necessary timing, and thereby the amounts of oils in the first compressor and the second compressor can be balanced with each other. Moreover, at this time, it is possible to keep the high pressure in the refrigeration cycle at an optimal high pressure by increasing the opening of the bypass valve or that of the injection valve. Therefore, the present invention makes it possible to perform an operation in which the high pressure in the refrigeration cycle is kept at the optimal high pressure and the COP is maximized while both of the oil amounts of the first oil pool and the second oil pool are ensured stably.

### BRIEF DESCRIPTION OF THE DRAWINGS

FIG. 1 is a schematic configuration diagram showing a refrigeration cycle apparatus according to Embodiment 1 of the present invention.
FIG. 2 is a vertical cross-sectional view of a first compressor in Embodiment 1.
FIG. 3A is a horizontal cross-sectional view taken along the line IIIA-IIIA in FIG. 2. FIG. 3B is a horizontal cross-sectional view taken along the line IIIB-IIIB in FIG. 2.
FIG. 4 is a vertical cross-sectional view of a second compressor in Embodiment 1.
FIG. 5 is a schematic view of the refrigeration cycle apparatus with a controller shown in FIG. 1.
FIG. 6 is a flow chart illustrating a control executed in Embodiment 1 of the present invention.
FIG. 7 is a schematic view of a refrigeration cycle apparatus with a controller according to Embodiment 2 of the present invention.
FIG. 8 is a time chart explaining a control method according to another embodiment.
FIG. 9 is a partial cross-sectional view of the first compressor provided with an electrostatic capacity type sensor.

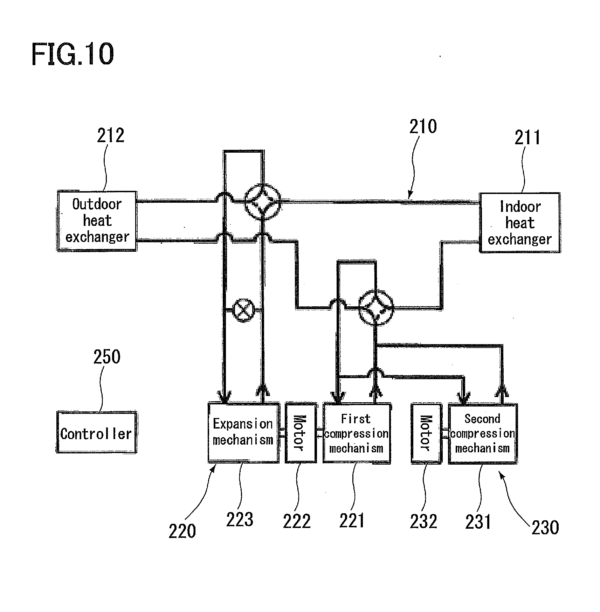

FIG. 10 is a configuration diagram illustrating a conventional refrigeration cycle apparatus.
FIG. 11 is a configuration diagram illustrating another conventional refrigeration cycle apparatus.
FIG. 12 is a perspective view illustrating compressors and an oil-equalizing pipe in the refrigeration cycle apparatus shown in FIG. 11.

### DESCRIPTION OF EMBODIMENTS

Hereinafter, embodiments of the present invention will be described with reference to the drawings.

### (Embodiment 1)

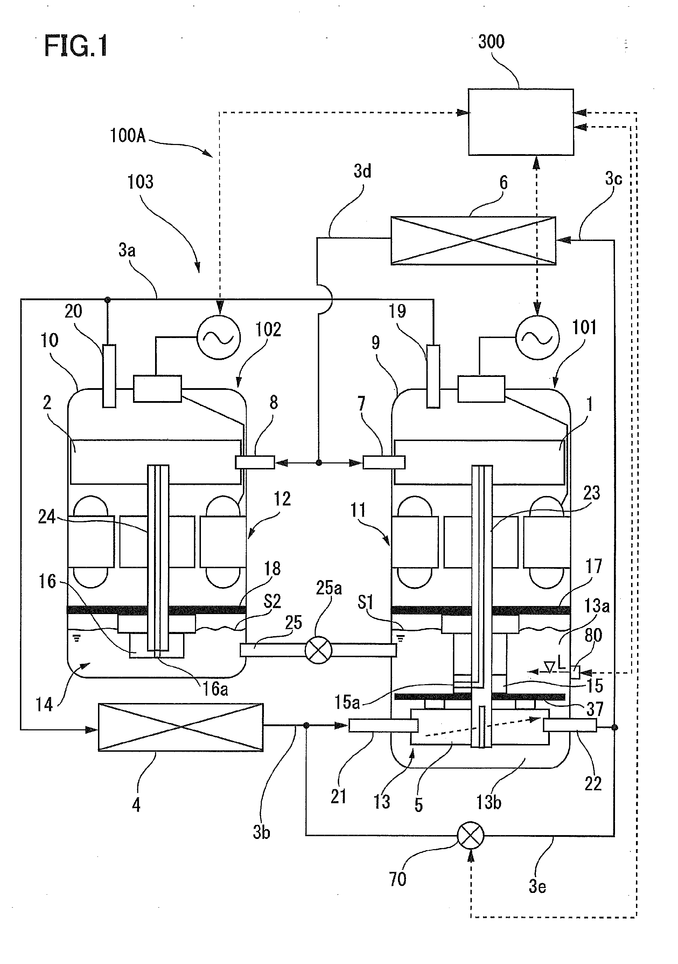

FIG. 1 shows a refrigeration cycle apparatus 100A according to Embodiment 1 of the present invention. The refrigeration cycle apparatus 100A includes a refrigerant circuit 103. The refrigerant circuit 103 is composed of a first compressor (expander-compressor unit) 101, a second compressor 102, a radiator 4, an evaporator 6, and first to fourth pipes 3a to 3d connecting these components.

Specifically, a first discharge pipe 19 of the first compressor 101 and a second discharge pipe 20 of the second compressor 102 are connected to the heat radiator 4 via the first pipe 3a having two branch pipes joined to one main pipe. The heat radiator 4 is connected to a suction pipe 21 on the expansion side of the first compressor 101 via the second pipe 3b. A discharge pipe 22 on the expansion side of the first compressor 101 is connected to the evaporator 6 via the third pipe 3c. The evaporator 6 is connected to a first suction pipe 7 of the first compressor 101 and a second suction pipe 8 of the second compressor 102 via the fourth pipe 3d having one main pipe to which two branch pipes are joined.

The first compressor 101 includes a first closed casing 9 accommodating a first compression mechanism 1, a first motor 11 and an expansion mechanism 5 that are coupled to each other by a first shaft 23. The second compression mechanism 102 includes a second closed casing 10 accommodating a second compression mechanism 2 and a second motor 12 that are coupled to each other by a second shaft 24.

The refrigerant compressed by the first compression mechanism 1 is discharged from the first compression mechanism 1 once into the first closed casing 9, and then flows out of the first closed casing 9 through the first discharge pipe 19. Likewise, the refrigerant compressed by the second compression mechanism 2 is discharged from the second compression mechanism 2 once into the second closed casing 10, and then flows out of the second closed casing 10 through the second discharge pipe 20. The refrigerant that has flown out of the first closed casing 9 and the refrigerant that has flown out of the second closed casing 10 merge while flowing through the first pipe 3a so as to be guided to the heat radiator 4. The refrigerant guided to the radiator 4 radiates heat there, and then is guided to the expansion mechanism 5 through the second pipe 3b, and drawn directly from the suction pipe 21 on the expansion side into the expansion mechanism 5. The refrigerant drawn into the expansion mechanism 5 expands there. At this time, the expansion mechanism 5 recovers power from the expanding refrigerant. The expanded refrigerant is discharged directly from the expansion mechanism 5 into the third pipe 3c through the discharge pipe 22 on the expansion side and guided to the evaporator 6. The refrigerant guided to the evaporator 6 absorbs heat and is evaporated there, and then is divided while flowing through the fourth pipe 3d so as to be drawn directly into the first compression mechanism 1 and the second compression mechanism 2 through the first suction pipe 7 and the second suction pipe 8, respectively. More specifically, the first compression mechanism 1 and the second compression mechanism 2 are disposed in parallel with each other in the refrigerant circuit 103. In other words, the first compression mechanism 1 is connected in parallel with the second compression mechanism 2 in the refrigerant circuit 103.

The refrigeration cycle apparatus 100A of the present embodiment further includes a bypass passage 3e that is branched from the second pipe 3b and bypasses the expansion mechanism 5 to merge with the third pipe 3c. The bypass passage 3e is provided with an opening-adjustable bypass valve 70 for adjusting the bypass flow rate.

The refrigeration cycle apparatus 100A also includes a controller 300 that controls the rotation speed of each of the first motor 11 and the second motor 12 as well as the opening of the bypass valve 70.

The refrigerant circuit 103 is filled with a refrigerant that turns into a supercritical state in a high pressure part (part extending from the first compression mechanism 1 and the second compression mechanism 2 to the expansion mechanism 5 through the heat radiator 4). In the present embodiment, the refrigerant circuit 103 is filled with carbon dioxide (CO₂) serving as the refrigerant. It should be noted that he type of the refrigerant is not particularly limited. The refrigerant may be a refrigerant that does not turn into a supercritical state during operation (a fluorocarbon refrigerant, for example).

The refrigerant circuit included in the refrigeration cycle apparatus of the present invention is not limited to the refrigerant circuit 103 that allows the refrigerant to flow only in one direction. It may be a refrigerant circuit in which the flowing direction of the refrigerant can be changed, for example, a refrigerant circuit having a four-way valve, etc. so as to switch between a heating operation and a cooling operation.

### <First compressor>

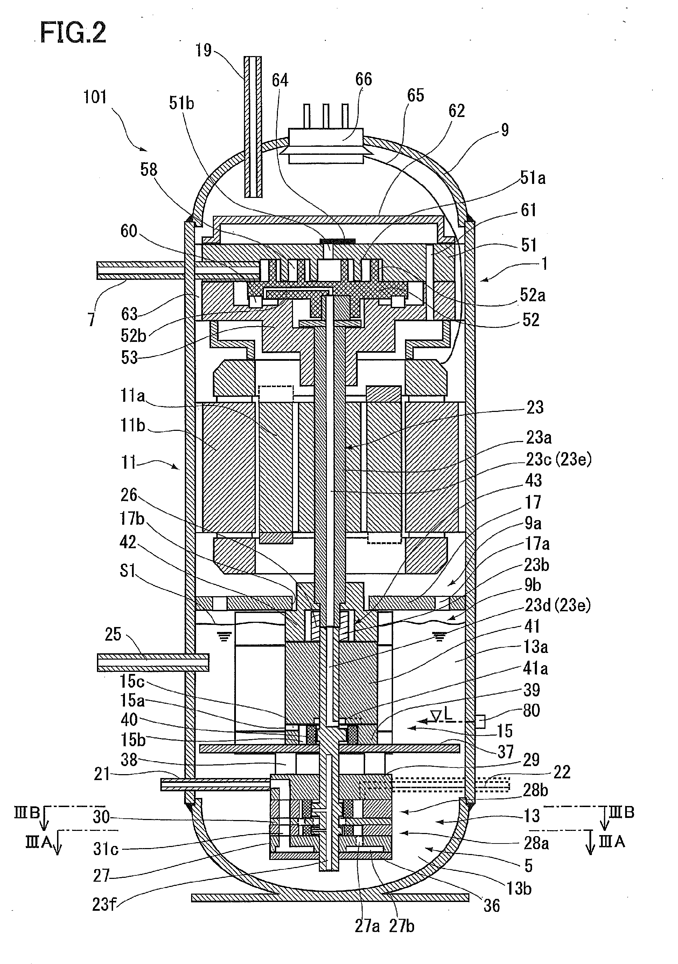

Next, the first compressor 101 will be described in detail with reference to FIG. 2.

The first closed casing 9 has a cylindrical shape extending in the vertical direction with its upper end and lower end being closed. The first closed casing 9 has, in a bottom portion thereof, a first oil pool 13 formed by allowing an oil to accumulate. An internal space of the first closed casing 9 above the first oil pool 13 is filled with the refrigerant discharged from the first compression mechanism 1. The expansion mechanism 5 is disposed at a lower position inside the first closed casing 9 and immersed in the first oil pool 13. The first compression mechanism 1 is disposed at an upper position inside the first closed casing 9. The first shaft 23 extends in the vertical direction across from the first compression mechanism 1 to the expansion mechanism 5. Furthermore, the first motor 11, a first oil-flow suppressing plate (suppressing member) 17, a first oil pump 15, and a heat-insulating member 37 are disposed in this order from top to bottom between the first compression mechanism 1 and the expansion mechanism 5 inside the first closed casing 9.

Inside the first shaft 23, a first oil supply passage 23e for guiding the oil from the first oil pump 15 to the first compression mechanism 1 is formed. More specifically, the first shaft 23 is composed of an upper shaft 23a and a lower shaft 23b, and the shafts 23a, 23b are coupled to each other at a position slightly below the first oil-flow suppressing plate 17 by a coupling member 26. The first oil supply passage 23e is composed of an upper oil channel 23c axially passing through the upper shaft 23a, and a lower oil channel 23d that extends downward from an upper end surface of the lower shaft 23b and opens on the side of the lower shaft 23b. Inside the lower shaft 23b, an expansion-mechanism-side oil supply passage 23f for introducing the oil from a lower end surface of the lower shaft 23b to each sliding portion of the expansion mechanism 5 is formed.

The first compression mechanism 1 is fixed to an inner circumferential surface of the first closed casing 9 by welding or the like. In the present embodiment, the first compression mechanism 1 is of scroll type. However, the type of the first compression mechanism 1 is not limited in any way, and a rotary-type compressor can be used, for example.

More specifically, the first compression mechanism 1 includes a stationary scroll 51, a movable scroll 52 axially facing the stationary scroll 51, and a bearing member 53 supporting an upper portion of the upper shaft 23a. Laps 51a, 52a in a spiral shape (such as an involute shape) meshing with each other are formed in the stationary scroll 51 and the movable scroll 52, respectively, and a compression chamber 58 in a spiral shape is defined between the laps 51a and 52a. At the center of the stationary scroll 51, a discharge port 51b adapted to be opened and closed by a reed valve 64 is provided. An Oldham ring 60 for preventing the movable scroll 52 from rotating is disposed below the movable scroll 52. At an upper end of the upper shaft 23a, an eccentric portion is formed, and the movable scroll 52 fits to the eccentric portion. Therefore, the movable scroll 52 pivots eccentrically with respect to the axial center of the upper shaft 23a. Furthermore, in the movable scroll 52, an oil-distribution passage 52b that guides the oil supplied from the first oil supply passage 23e to each sliding portion is provided.

A cover 62 is provided above the stationary scroll 51. A discharge passage 61 passing through the stationary scroll 51 and the bearing member 53 in the vertical direction is formed in the stationary scroll 51 and the bearing member 53 at a position covered by the cover 62. Furthermore, in the stationary scroll 51 and the bearing member 53, a flow passage 63 passing through the stationary scroll 51 and the bearing member 53 in the vertical direction is formed at a position outside the cover 62. Such a configuration allows the refrigerant compressed in the compression chamber 58 to be discharged once into a space inside the cover 62 through the discharge port 51b and thereafter discharged below the first compression mechanism 1 through the discharge passage 61. Then, the refrigerant below the first compression mechanism 1 is guided above the first compression mechanism 1 through the flow passage 63.

The first suction pipe 7 passes through a lateral part of the first closed casing 9 so as to be connected to the stationary scroll 51. With this configuration, the first suction pipe 7 is connected to the suction side of the first compression mechanism 1. The first discharge pipe 19 passes through an upper part of the first closed casing 9. A lower end of the first discharge pipe 19 opens into a space above the first compression mechanism 1 inside the first closed casing 9.

The first motor 11 includes a rotor 11a fixed to the middle of the upper shaft 23a and a stator 11b disposed around the rotor 11a. The stator 11b is fixed to the inner circumferential surface of the first closed casing 9. The stator 11b is connected to a terminal 66 via a motor wiring 65. The first motor 11 rotates the upper shaft 23a, thereby allowing the first compression mechanism 1 to be driven.

The first oil-flow suppressing plate 17 is disposed slightly above the first oil pool 13 (during shutdown) so as to partition a space inside the first closed casing 9 horizontally, that is, partition the space into an upper space 9a and a lower space 9b. In the present embodiment, the first oil-flow suppressing plate 17 has a vertically flattened disc shape with a diameter that is approximately the same as an internal diameter of the first closed casing 9, and a periphery of the first oil-flow suppressing plate 17 is fixed to the inner circumferential surface of the first closed casing 9 by welding or the like. The first oil-flow suppressing plate 17 suppresses the oil of the first oil pool 13 from flowing with a flow of the refrigerant inside the first closed casing 9. Specifically, although the refrigerant filling the upper space 9a forms a swirl flow due to the rotation of the rotor 11a of the first motor 11, the swirl flow is blocked by the first oil-flow suppressing plate 17 before reaching an oil level S1 of the first oil pool 13.

In the present embodiment, the oil pump 15, the heat-insulating member 37, and the expansion mechanism 5 are fixed to the first closed casing 9 via the first oil-flow suppressing plate 17. However, for example, it also is possible to fix the heat-insulating member 37 or the after-mentioned upper bearing member 29 of the expansion mechanism 5 to the first closed casing 9 and to fix the oil pump 15 and the first oil-flow suppressing plate 17 to the first closed casing 9 via it. In this case, the first oil-flow suppressing plate 17 may have a disc shape with a diameter slightly smaller than the internal diameter of the first closed casing 9, and the below-described oil-return passage may be defined by a gap between the periphery of the first oil-flow suppressing plate 17 and the inner circumferential surface of the first closed casing 9.

In the periphery of the first oil-flow suppressing plate 17, a plurality of through holes 17a are provided, and the through holes 17a serve as an oil-return passage that allows the oil to flow down from the upper space 9a to the lower space 9b. The number and shape of the through holes 17a can be selected appropriately. Furthermore, at the center of the first oil-flow suppressing plate 17, a through hole 17b is provided. A bearing member 42 supporting a lower portion of the upper shaft 23a is mounted to a lower surface of the first oil-flow suppressing plate 17 so as to fit into the through hole 17b.

The bearing member 42 is provided with an accommodation chamber 43 accommodating the coupling member 26. Furthermore, an intermediate member 41 is disposed below the bearing member 42. The intermediate member 41 extends in the vertical direction with a specified cross-sectional shape, and the lower shaft 23b passes through the center of the intermediate member 41. The intermediate member 41 closes the accommodating chamber 43.

The first oil pump 15 is sandwiched between the intermediate member 41 and the heat-insulating member 37. In the present embodiment, the first oil pump 15 is of rotary type. However, the type of the first oil pump 15 is not limited in any way, and a trochoid gear-type pump also can be used, for example.

Specifically, the first oil pump 15 includes a piston 40 fitting to an eccentric portion formed in the lower shaft 23b so as to move eccentrically, and a housing (cylinder) 39 accommodating the piston 40. A crescent-shaped working chamber 15b is formed between the piston 40 and the housing 39, and the working chamber 15b is closed by the intermediate member 41 from the top and closed by the heat-insulating member 37 from the bottom. The housing 39 is provided with a suction passage 15c for communicating the working chamber 15b into the first oil pool 13, and an inlet of the suction passage 15c forms a first oil suction port 15a. Furthermore, a guide passage 41a for guiding the oil discharged from the oil pump 15 to an inlet of the first oil supply passage 23e is formed on a lower surface of the intermediate member 41. With such a configuration, when the first shaft 23 rotates, the oil of the first oil pool 13 is drawn through the first oil suction port 15a and thereafter discharged to the guide passage 41a by the first oil pump 15, and then is supplied to the first compression mechanism 1 through the guide passage 41a and the first oil supply passage 23e.

The heat-insulating member 37 partitions the first oil pool 13 into an upper layer 13a and a lower layer 13b, and regulates the flow of the oil between the upper layer 13a and the lower layer 13b. In the present embodiment, the heat-insulating member 37 has a vertically flattened disc shape with a diameter slightly smaller than the internal diameter of the first closed casing 9, and a slight flow of oil is allowed through a gap formed between the heat-insulating member 37 and the inner circumferential surface of the first closed casing 9. The lower shaft 23b passes through the center of the heat-insulating member 37.

The expansion mechanism 5 is provided below the heat-insulating member 37, with a spacer 38 being interposed therebetween. The spacer 38 forms a space filled with the oil of the lower layer 13b between the heat-insulating member 37 and the expansion mechanism 5. The oil filling the space defined by the spacer 38 acts as a heat insulator and axially forms a thermal stratification.

In the present embodiment, the expansion mechanism 5 is of two-stage rotary type. However, the type of the expansion mechanism 5 is not limited in any way, and it also is possible to use another type of expander such as a single-stage rolling piston style or sliding vane style rotary type expander, and a scroll type expander.

More specifically, the expansion mechanism 5 includes a closing member 36, a lower bearing member 27, a first expansion portion 28a, an intermediate plate 30, a second expansion portion 28b, and an upper bearing member 29 that are disposed in this order from bottom to top. The second expansion portion 28b has a larger height than that of the first expansion portion 28a. In the present embodiment, the suction pipe 21 on the expansion side and the discharge pipe 22 on the expansion side pass through the lateral part of the first closed casing 9 and are connected to the upper bearing member 29.

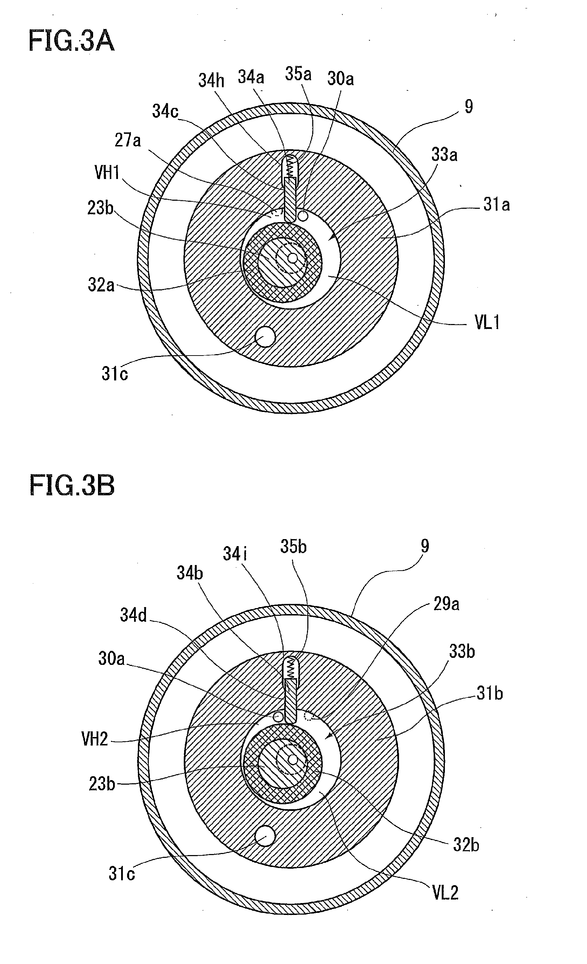

As shown in FIG. 3A, the first expansion portion 28a includes a cylindrical piston 32a fitting to an eccentric portion formed in the lower shaft 23b and an approximately cylindrical cylinder 31a accommodating the piston 32a. A first fluid chamber 33a is defined between an inner circumferential surface of the cylinder 31a and an outer circumferential surface of the piston 32a. A vane groove 34c extending radially outward is formed in the cylinder 31a, and a vane 34a is inserted slidably into the vane groove 34c. Furthermore, a back chamber 34h that extends radially outward and is in communication with the vane groove 34c is formed on the back side (radially outward side) of the vane 34a in the cylinder 31a. In the back chamber 34h, a spring 35a for biasing the vane 34a toward the piston 32a is provided. The vane 34a partitions the first fluid chamber 33a into a fluid chamber VH1 on the high pressure side and a fluid chamber VL1 on the low pressure side.

As shown in FIG. 3B, the second expansion portion 28b has almost the same configuration as that of the first expansion portion 28a. More specifically, the second expansion portion 28b includes a cylindrical piston 32b fitting to an eccentric portion formed in the lower shaft 23b, and an approximately cylindrical cylinder 31b accommodating the piston 32b. A second fluid chamber 33b is formed between an inner circumferential surface of the cylinder 31b and an outer circumferential surface of the piston 32b. A vane groove 34d extending radially outward also is formed in the cylinder 31b, and a vane 34b is inserted slidably into the vane groove 34d. Furthermore, a back chamber 34i that extends radially outward and is in communication with the vane groove 34d is formed on the back side of the vane 34b in the cylinder 31b. In the back chamber 34i, a spring 35b for biasing the vane 34b toward the piston 32b is provided. The vane 34b partitions the second fluid chamber 33b into a fluid chamber VH2 on the high pressure side and a fluid chamber VL2 on low pressure side.

The lower bearing member 27 supports the lower shaft 23b and closes the first fluid chamber 33a from the bottom. The lower bearing member 27 is provided with a pre-expansion fluid chamber 27b that is in communication with the suction pipe 21 on the expansion side through an introduction passage 31c. The closing member 36 closes the pre-expansion fluid chamber 27b. Furthermore, the lower bearing member 27 is provided with a suction port 27a for allowing the refrigerant to flow from the pre-expansion fluid chamber 27b to the fluid chamber VH1 on the high pressure side of the first expansion portion 28a.

The intermediate plate 30 closes the first fluid chamber 33a from the top and closes the second fluid chamber 33b from the bottom. In the intermediate plate 30, a communication passage 30a that brings the fluid chamber VL1 on the low pressure side of the first expansion portion 28a into communication with the fluid chamber VH2 on the high pressure side of the second expansion portion 28b so as to constitute an expansion chamber is formed.

The upper bearing member 29 supports the lower shaft 23b and closes the second fluid chamber 33b from the top. Moreover, the upper bearing member 29 is provided with a discharge port 29a for introducing the refrigerant from the fluid chamber VL2 on the low pressure side of the second expansion portion 28b to the discharge pipe 22 on the expansion side.

Furthermore, in the present embodiment, the first compressor 101 is provided with an ultrasonic sensor 80 serving as an oil level sensor for detecting that the oil level S1 of the first oil pool 13 becomes equal to or lower than a specified level L. Specifically, the ultrasonic sensor 80 is attached to a region of an outer circumferential surface of the first closed casing 9 between the first oil-flow suppressing plate 17 and the heat-insulating member 37. The ultrasonic sensor 80 emits ultrasonic wave toward the intermediate member 41 and receives the sound reflected therefrom so as to detect whether the oil is present at the level at which the sensor 80 is attached based on the time spent from the emitting to the receiving. More specifically, the ultrasonic sensor 80 is disposed slightly above the oil pump 15, and the specified level L is set to be higher than the first oil suction port 15a.

Next, the circulation of oil inside the first compressor 101 will be described.

The oil of the upper layer 13a of the first oil pool 13 is supplied to the first compression mechanism 1 through the first oil supply passage 23e by the first oil pump 15. On the way thereto, the oil could leak from slight gaps between the coupling member 26 and the upper shaft 23a and between the coupling member 26 and the lower shaft 23b in coupling portions with the upper shaft 23a and with the lower shaft 23b. However, since the accommodation chamber 43 accommodating the coupling member 26 is closed by the bearing member 42 and the intermediate member 41, the oil can be supplied stably to the first compression mechanism 1. Moreover, the oil supplied to the first compression mechanism 1 is used for seal and lubrication between components, and thereafter a part of the oil is discharged through the discharge passage 61 together with the refrigerant, and the rest of the oil flows down onto an upper end of the rotor 11a while lubricating the bearing member 53 and the upper shaft 23a. Thereafter, the oil discharged below the first compression mechanism 1 moves below the first motor 11 with the refrigerant. Here, the oil separated from the refrigerant by gravity and centrifugal force returns to the first oil pool 13 again through the through openings 17a of the first oil-flow suppressing plate 17. On the other hand, the oil that has not been separated from the refrigerant is guided above the first compression mechanism 1 through the flow passage 63, etc. and discharged to the first pipe 3a through the first discharge pipe 19 together with the refrigerant.

Meanwhile, the oil is pumped from the lower layer 13b of the first oil pool 13 through the expansion-mechanism-side oil supply passage 23f that is provided inside the lower shaft 23b, and thereby the oil is supplied to the expansion mechanism 5. The oil supplied to the expansion mechanism 5 is used for seal and lubrication between components. At this time, a part of the oil flows into the first fluid chamber 33a and the second fluid chamber 33b through gaps around the pistons 32a, 32b and the vanes 34a, 34b. The oil that has flowed thereinto is discharged to the third pipe 3c through the discharge pipe 22 on the expansion side.

### <Second compressor>

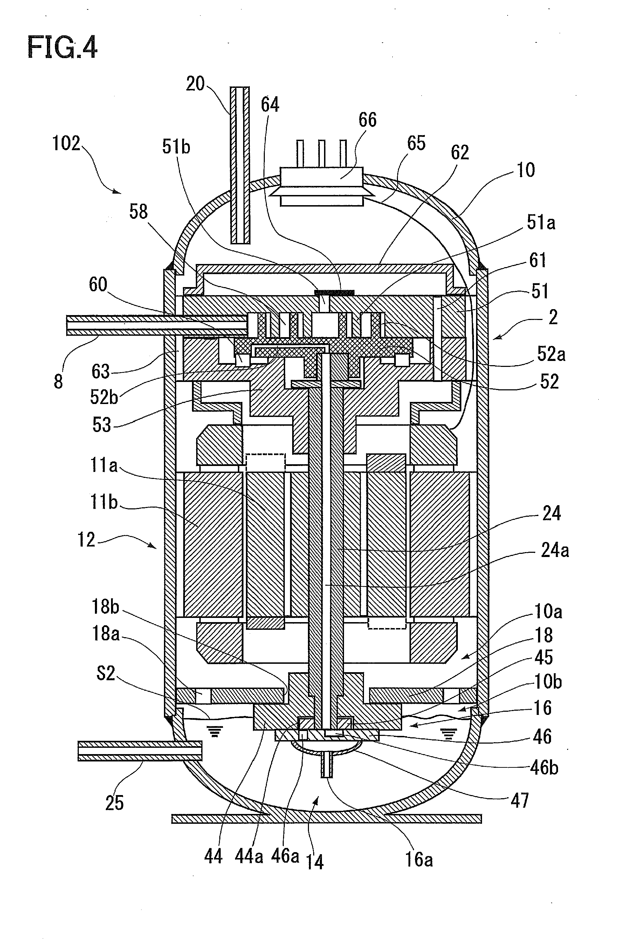

Next, the second compression mechanism 102 will be described in detail with reference to FIG. 4.

The second closed casing 10 has a cylindrical shape extending in the vertical direction with its upper end and lower end being closed. In the present embodiment, the second closed casing 10 has the same internal diameter as that of the first closed casing 9. The first closed casing 10 has, in a bottom portion thereof, a second oil pool 14 formed by allowing the oil to accumulate. An internal space of the second closed casing 10 above the second oil pool 14 is filled with the refrigerant discharged from the second compression mechanism 2. The second compression mechanism 2, the second motor 12, a second oil-flow suppressing plate 18, and a second oil pump 16 are disposed in this order from top to bottom inside the second closed casing 10. The second shaft 24 extends in the vertical direction across from the second compression mechanism 2 to the second oil pump 16.

Inside the second shaft 24, a second oil supply passage 24a axially passing through the second shaft 24 for guiding the oil from the second oil pump 16 to the second compression mechanism 2 is formed.

In the present embodiment, the same scroll-type compression mechanism as the first compression mechanism 1 is used as the second compression mechanism 2. Also, the second motor 12 is the same as the first motor 11. Thus, concerning the configuration of the second compression mechanism 2 and the second motor 12, the same components as those in the first compression mechanism 1 and the first motor 11 are indicated with the same reference numerals, and the descriptions thereof are omitted.

The second oil-flow suppressing plate 18 is disposed slightly above the second oil pool 14 (during shutdown) so as to partition a space inside the second closed casing 10 horizontally, that is, partition the space into an upper space 10a and a lower space 10b. In the present embodiment, the second oil-flow suppressing plate 18 has a vertically flattened disc shape with a diameter that is approximately the same as an internal diameter of the second closed casing 10, and a periphery of the second oil-flow suppressing plate 18 is fixed to an inner circumferential surface of the second closed casing 10 by welding or the like. The second oil-flow suppressing plate 18 suppresses the oil of the second oil pool 14 from flowing with a flow of the refrigerant inside the second closed casing 10. Specifically, although the refrigerant filling the upper space 10a forms a swirl flow due to the rotation of the rotor 11a of the second motor 12, the swirl flow is blocked by the second oil-flow suppressing plate 18 before reaching an oil level S2 of the second oil pool 14.

In the periphery of the second oil-flow suppressing plate 18, a plurality of through holes 18a are provided, and the through holes 18a serve as an oil-return passage that allows the oil to flow down from the upper space 10a to the lower space 10b. The number and shape of the through holes 18a can be selected appropriately. Furthermore, at the center of the second oil-flow suppressing plate 18, a through hole 18b is provided. A bearing member 44 supporting a lower portion of the second shaft 24 is mounted to a lower surface of the second oil-flow suppressing plate 18 so as to fit into the through hole 18b.

The second oil pump 16 in the present embodiment includes an oil gear pump 45 and an oil channel plate 46. The oil gear pump 45 is disposed inside a concave portion 44a provided on a lower surface of the bearing member 44 and is mounted to a lower end of the second shaft 24. The oil channel plate 46 is mounted to the bearing member 44 so as to close the concave portion 44a. The oil channel plate 46 has a suction passage 46a that passes through the oil channel plate 46 so as to introduce the oil to a working chamber of the oil gear pump 45, and a discharge passage 46b that introduces the oil from the working chamber of the oil gear pump 45 to the second oil supply passage 24a.

Furthermore, in the present embodiment, a funnel-shaped oil strainer 47 is disposed below the oil channel plate 46, and an inlet of the oil strainer 47 forms a second oil suction port 16a. However, the oil strainer 47 can be omitted. In this case, a lower end of the suction passage 46a of the oil channel plate 46 forms the second oil suction port 16a. The type of the second oil pump 16 is not limited in any way, and it also is possible to use the same rotary-type pump as the first oil pump 15, for example.

Next, the circulation of oil inside the second compressor 102 will be described.

When the second shaft 24 rotates, the oil of the second oil pool 14 is drawn through the second oil suction port 16a and thereafter discharged to the second oil supply passage 24a by the second oil pump 16, and then is supplied to the second compression mechanism 2 through the second oil supply passage 24a. The flowing state of the oil thereafter is the same as that on the compression mechanism 1 of the first compressor 101.

### <Relationship between the first compressor and the second compressor>

Next, the relationship between the first compressor 101 and the second compressor 102 will be described.

The first closed casing 9 and the second closed casing 10 are coupled to each other by an oil-equalizing pipe 25. The first oil pool 13 is in communication with the second oil pool 14 through the oil-equalizing pipe 25. The oil-equalizing pipe 25 is provided with an oil-equalizing pipe valve 25a, which can limit or completely inhibit the oil flow between the first oil pool 13 and the second oil pool 14 by being opened or closed. When the oil-equalizing pipe valve 25a is opened during shutdown, the oil level S1 of the first oil pool 13 and the oil level S2 of the second oil pool 14 are maintained on the same horizontal plane.

### <Control by the controller>

Next, the control performed by the controller 300 will be described.

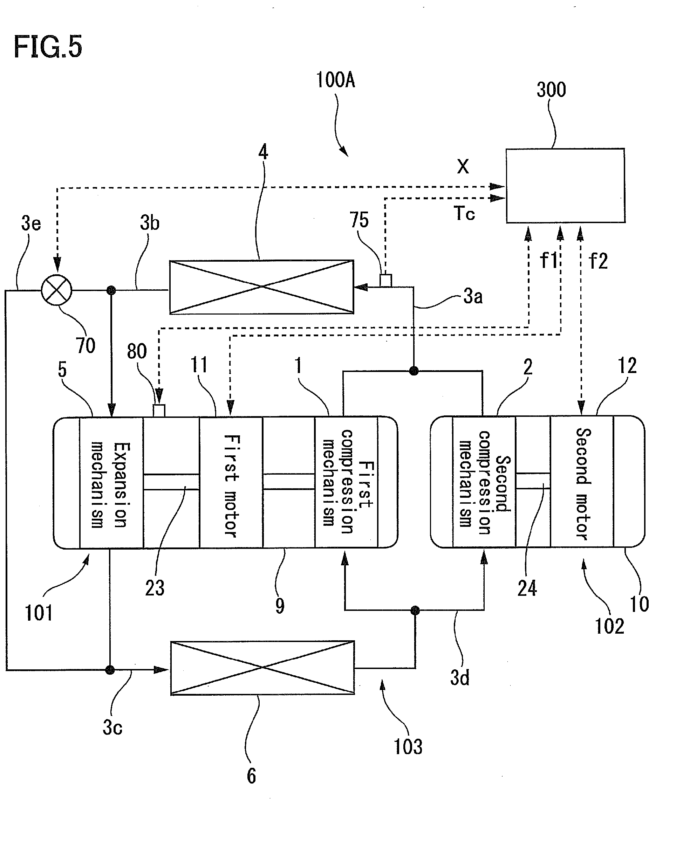

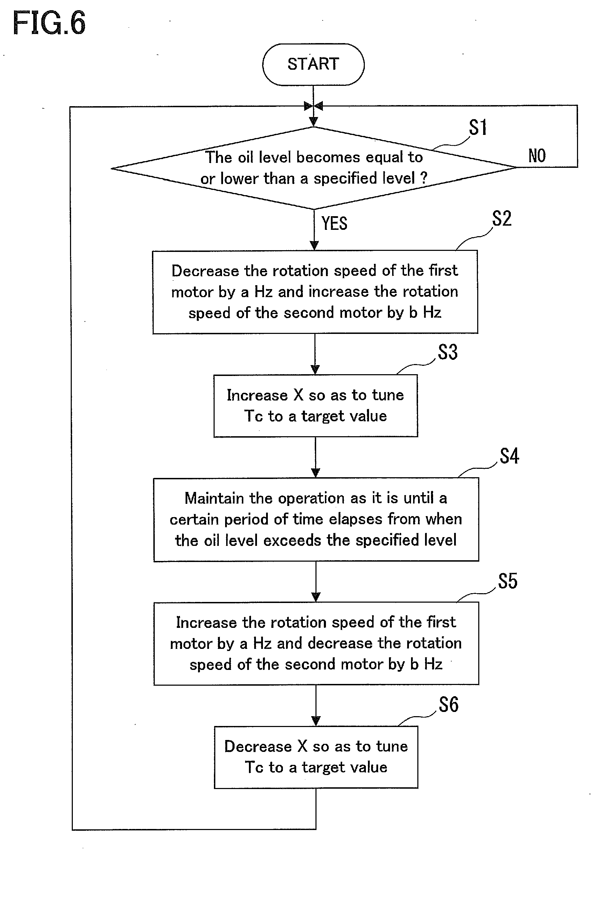

The controller 300 performs a starting operation first to bring the rotation speed of the first motor 11 and that of the second motor 12 to specified rotation speeds f1 and f2, respectively, and to adjust an opening X of the bypass valve 70. Subsequently, the controller 300 performs a normal operation. In the normal operation, the controller 300 performs a control for balancing the amounts of oils in the first compressor and the second compressor with each other, that is, performs an oil-equalizing operation, based on the signals from the ultrasonic sensor 80, etc. This will be described with reference to FIG. 5 and FIG. 6. For the convenience of illustration, the first compressor 101 and the second compressor 102 each are drawn in a lying posture in FIG. 5, but they actually are vertical-type compressors as shown in FIG. 2 and FIG. 4.

The controller 300 maintains the rotation speed f1 of the first motor 11 and the rotation speed f2 of the second motor 12 as well as the opening X of the bypass valve 70 until the oil level S1 (see FIG. 1) of the first oil pool 13 becomes equal to or lower than the specified level L (NO in Step S1). When the ultrasonic sensor 80 detects that the oil level S1 of the first oil pool 13 becomes equal to or lower than the specified level L (YES in Step S1), the controller 300 decreases the rotation speed f1 of the first motor 11 by a Hz and increases the rotation speed f2 of the second motor 12 by b Hz to start the oil-equalizing operation (Step S2).

As stated herein, a Hz, which is a decrement by which the rotation speed of the first motor 11 is decreased, and b Hz, which is an increment by which the rotation speed of the second motor 12 is increased, only need to allow the oil level S1 of the first oil pool 13 to turn to rise. The large/small relationship between a rotation speed f1' (= f1 - a), which is the changed rotation speed of the first motor 11, and a rotation speed f2' (= f2 + b), which is the changed rotation speed of the second motor, does not necessary have to satisfy f1'<f2'. The critical point for the decrement of a Hz and that for the increment of b Hz can be found in advance by an experiment, etc. Thus, the controller may store, as a table, the decrement of a Hz and the increment of b Hz that are predetermined in accordance with a difference between the rotation speed of the first motor 11 and that of the second motor 12.
In the present embodiment, since the first compression mechanism 1 has the same displacement volume as that of the second compression mechanism 2, the decrement of a Hz on the rotation speed of the first motor 11 preferably is the same as the increment of b Hz on the rotation speed of the second motor 12.

Thereafter, the controller 300 detects a temperature Tc of the discharged refrigerant guided to the radiator 4 through the first pipe 3a by using a temperature sensor 75 provided at the main pipe of the first pipe 3a, and adjusts the opening X of the bypass valve 70 so that the temperature Tc is kept approximately constant. Specifically, the controller 300 increases the opening X of the bypass valve 70 so as to tune the temperature Tc of the discharged refrigerant to a target value (Step S3).

The decrement of a Hz and the increment of b Hz each may be small (5 Hz or 10 Hz, for example) so that Step S2 and Step S3 are repeated multiple times.

After the temperature Tc of the discharged refrigerant is tuned to the target value, the controller 300 maintains the rotation speed f1' of the first motor 11 and the rotation speed f2'of the second motor 12 as well as the opening X of the bypass valve 70 from the start of the oil-equalizing operation, that is, from the start of Step S2 process, until a specified period of time elapses (Step S4). The specified period of time is a period from when the ultrasonic sensor 80 detects that the oil level S1 of the first oil pool 13 exceeds the specified level L (see FIG. 1) until a certain period of time T elapses (a period slightly longer than T). As stated herein, the certain period of time T is a period in which the oil of the first oil pool 13 can be ensured sufficiently (a period in which the oil level S1 reaches the first oil-flow suppressing plate 17, for example). The certain period of time T may be predetermined in accordance with, for example, a difference between the rotation speed f1' of the first motor and the rotation speed f2' of the second motor.

When the certain period of time T has elapsed since the oil level S1 of the first oil pool 13 exceeded the specified level L, the controller 300 increases the rotation speed of the first motor 11 by a Hz to return it from f1' to f1 and decreases the rotation speed of the second motor 12 by b Hz to return it from f2' to f2 (Step S5). Furthermore, the controller 300 decreases the opening X of the bypass valve 70 to return it to the opening before the change, and tunes the temperature Tc of the discharged refrigerant to a target value (Step S6). More specifically, the controller 300 returns the rotation speed f1' of the first motor 11 and the rotation speed f2' of the second motor 12 as well as the opening X of the bypass valve 70 to the conditions before the start of the oil-equalizing operation and ends the oil-equalizing operation.

As described above, in the refrigeration cycle apparatus 100A of the present embodiment, it is possible to decrease the rotation speed of the first motor 11 of the first compressor 1 and increase the rotation speed of the second motor 12 of the second compressor 2 automatically at necessary timing. Thereby, the amounts of oils in the first compressor 101 and the second compressor 102 can be balanced with each other. Moreover, at this time, it is possible to keep the high pressure in the refrigeration cycle at the optimal high pressure by increasing the opening X of the bypass valve 70. Therefore, the refrigeration cycle apparatus 100A can perform an operation in which the high pressure in the refrigeration cycle is kept at the optimal high pressure and the COP is maximized while both of the oil amounts of the first oil pool 13 and the second oil pool 14 are ensured stably.

Moreover, in the present embodiment, it is only required to provide the first compressor 101 with the ultrasonic sensor 80, and thereby the imbalance between the oil pools can be prevented at lower cost with a smaller number of sensors.

Furthermore, since the specified level L, with which the ultrasonic sensor 80 determines the presence or absence of the oil, is set to be higher than the first oil suction port 15a, the oil of the first oil pool 13 surely is drawn into the first oil pump 15.

Moreover, since the refrigeration cycle apparatus 100A of the present embodiment is provided with the oil-equalizing pipe 25 that brings the first oil pool 13 into communication with the second oil pool 14, it is possible to ease the imbalance between the oil pools during the operation by opening the oil-equalizing pipe valve 25a also during the operation. Accordingly, the first oil pool 13 and the second oil pool 14 can be ensured more stably.

### <Modification>

In the present embodiment, although the timing for returning the rotation speeds of the first motor 11 and the second motor 12 to the original rotation speeds is defined to be the timing when the certain period of time T has elapsed since the oil level S1 of the first oil pool 13 exceeded the specified level L, the following also is possible, for example. That is, it is possible to provide the first compression mechanism 101 with a second oil level sensor for detecting the upper limit of the oil level S1 of the first oil pool 13, and after Step S3, proceed to Step S5 when the second oil level sensor detects that the oil level S1 has reached the upper limit. Or it is possible to provide the second compressor 102 with a second oil level sensor for detecting the lower limit of the oil level S2 of the second oil pool 14, and after Step S3, proceed to Step S5 when the second oil level sensor detects that the oil level S2 has reached the lower limit. More specifically, both the start and end of the specified period of time, during which the decreased rotation speed of the first motor 11 and the increased rotation speed of the second motor 12 are maintained, may be determined using the oil level sensors.

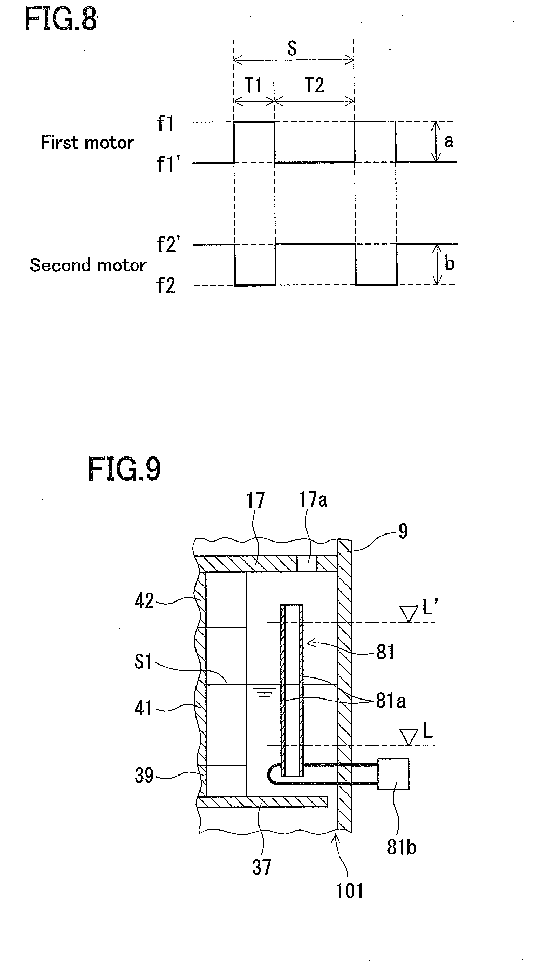

Although the ultrasonic sensor 80 is employed as the oil level sensor used in the present embodiment, an electrostatic capacity type sensor 81 with a detector being disposed inside the first closed casing 10 as shown in FIG. 9 may be employed, for example. In the electrostatic capacity type sensor 81, the detector is composed of a pair of electrodes 81a facing each other and extending in the vertical direction. The electrodes 81a are connected to a measuring unit 81b disposed outside the first closed casing 9. The measuring unit 81b may be embedded in the controller 300. The measuring unit 81b can detect at which position the oil level S1 is present by measuring the voltage between the electrodes 81a. Use of the electrostatic capacity type sensor 81 enables to measure the height of the oil level S1, making it possible to proceed to Step S5 when, instead of Step S4 in the flow chart shown in FIG. 6, the oil level S1 of the first oil pool 13 reaches a second specified level L' that is sufficiently higher than the specified level L.

Alternatively, a sensor with a contact, such as a float sensor, may be used as the oil level sensor instead of a contactless sensor such as the ultrasonic sensor 80 and the electrostatic capacity type sensor 81.

Furthermore, although the temperature Tc of the discharged refrigerant is used when the controller 300 adjusts the opening X of the bypass valve 70 in the present embodiment, the pressure of the discharged refrigerant may be used instead. This makes it possible to determine the opening X that maximizes the COP of the refrigeration cycle apparatus based on the discharge pressures of the compression mechanisms 1 and 2.

### (Embodiment 2)

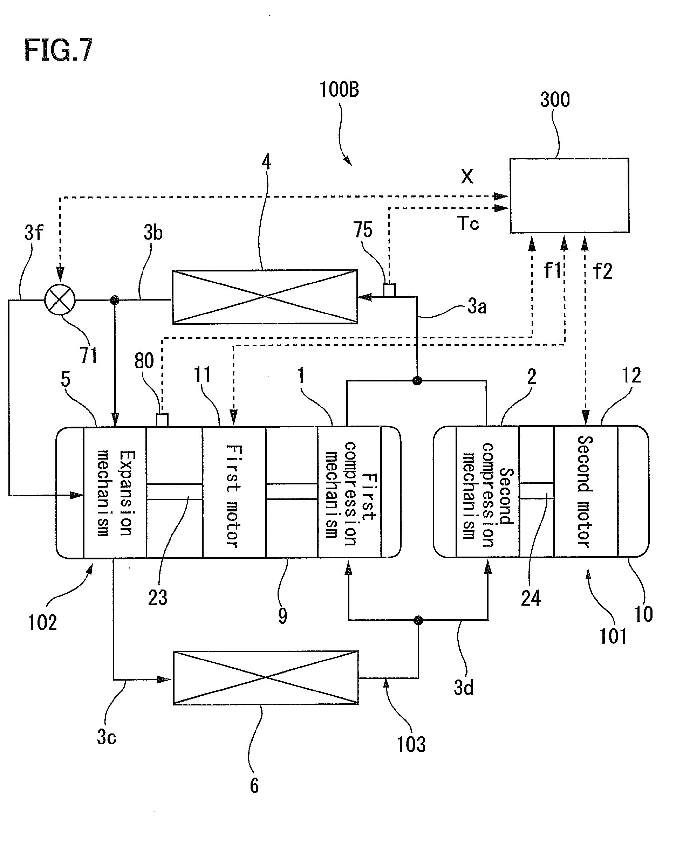

FIG. 7 shows a refrigeration cycle apparatus 100B according to Embodiment 2 of the present invention. The refrigeration cycle apparatus 100B according to Embodiment 2 is the same as the refrigeration cycle apparatus 100A according to Embodiment 1, except that an injection passage 3f is provided instead of the bypass passage 3e. Thus, the same components as those used in Embodiment 1 are designated by the same reference numerals, and the descriptions thereof are omitted. The first compressor 101 and the second compressor 102 each are drawn in a lying posture also in FIG. 7 as in FIG. 5, but as shown in FIG. 2 and FIG. 4, they actually are vertical-type compressors as in Embodiment 1.

The injection passage 3f is branched from the second pipe 3b and supplies additionally the refrigerant to the expansion mechanism 5 in the expansion process. The injection passage 3f is provided with an opening-adjustable injection valve 71 for adjusting the injection flow rate.

The method for controlling the controller 300 (the starting operation and normal operation) in Embodiment 2 is the same as that described in Embodiment 1, except for that "the bypass valve 70" is replaced with "the injection valve 71". That is, the controller 300 brings the rotation speed of the first motor 11 and that of the second motor 12 to f1 and f2, respectively, and adjusts an opening X of the injection valve 71 first. Subsequently, the controller 300 shifts to the oil-equalizing operation when the ultrasonic sensor 80 detects that the oil level S1 of the first oil pool 13 becomes equal to or lower than the specified level L (YES in Step S1). More specifically, the controller 300 decreases the rotation speed f1 of the first motor 11 only by a Hz and increases the rotation speed f2 of the second motor 12 only by b Hz (Step S2), and then adjusts the opening X of the injection valve 71 so that the temperature Tc of the discharged refrigerant is kept approximately constant. Then, when the specified period of time has elapsed since the start of the oil-equalizing operation, the controller 300 returns the rotation speeds of the first motor 11 and the second motor 12 as well as the opening X of the injection valve 71 to the original conditions and ends the oil-equalizing operation.

When thus configured, the expansion mechanism 5 can recover power also from the refrigerant flowing through the injection passage 3f while the flow rate of the refrigerant flowing in the expansion mechanism 5 is variable. This makes it possible to increase the efficiency in recovering energy from the refrigerant and enhance the COP. The configuration of Embodiment 2 is the same as that of Embodiment 1 except for the injection passage 3f, and thus the same effects (balancing of the amounts of oils, etc.) also can be achieved in Embodiment 2 as in Embodiment 1.

The modification described in Embodiment 1 is applicable also to Embodiment 2.

### (Another Embodiment)

In all the above-mentioned embodiments, the rotation speed of the first motor 11 is once decreased and the rotation speed of the second motor 12 is once increased when the oil level sensor detects that the oil level S1 of the first oil pool 13 becomes equal to or lower than the specified level L. However, the controller 300 may determine, at a predetermined interval, that the oil level S1 of the first oil pool 13 becomes equal to or lower than the specified level and shift to the oil-equalizing operation. That is, the rotation speeds of the first motor 11 and the second motor 12 may be switched at the set period of time. Preferably, the interval is a period of time that allows the specified level to be higher than the first oil suction port 15a.

As shown in FIG. 8, the controller 300 keeps the rotation speed of the first motor 11 at f1 and the rotation speed of the second motor 12 at f2 until the first set period of time T1 elapses first after the starting operation is ended. Then, when the first set period of time T1 has elapsed, the controller 300 decreases the rotation speed f1 of the first motor 11 by a Hz and increases the rotation speed f2 of the second motor 12 by b Hz. And until a second set period of time T2, which is sufficiently longer than the first set period of time T1, elapses from then, the controller 300 keeps the rotation speed of the first motor 11 at f1' and the rotation speed of the second motor 12 at f2', and returns the rotation speeds of the first motor 11 and the second motor 12 to the original rotation speeds when the second set period of time T2 has elapsed. In this way, the controller 300 repeats continuously a cycle S composed of the first set period of time T1 and the second set period of time T2. That is, the above-mentioned interval is a total of the first set period of time T1 and the second set period of time T2. Moreover, the controller 300 adjusts the opening X of the bypass valve 70 or that of the injection valve 71 so that the temperature Tc or pressure of the discharged refrigerant is kept approximately constant every time the controller 300 changes the rotation speeds of the first motor 11 and the second motor 12, in the same manner as in all the above-mentioned embodiments.

This also makes it possible to ensure both of the first oil pool 13 and the second oil pool 14 stably while controlling the high pressure in the refrigeration cycle so as to maximize the COP.

In this configuration, the control is performed so that the operation time during which the first compressor 101 rotates rapidly is shorter than the operation time during which the second compressor 102 rotates rapidly. Here, the first compressor 101 consumes a larger amount of oil than the second compressor 102 does because the first compressor 101 has two fluid machines, which are the first compression mechanism 1 and the expansion mechanism 5. Thus, if the rotation speeds of the first compressor 101 and the second compressor 102 are increased and decreased alternately for the same period of time, there is a possibility of the first oil pool 13 of the first compressor 101 being exhausted. However, in the present configuration, the exhaustion of the first oil pool 13 can be suppressed because the operation time during which the first compressor 101 rotates rapidly is shorter.

### INDUSTRIAL APPLICABILITY

The refrigeration cycle apparatus according to the present invention is useful as a means for recovering expansion energy of a refrigerant in a refrigeration cycle so as to recover power.

## Claims

1. A refrigeration cycle apparatus comprising:
a first compressor including a first compression mechanism for compressing a refrigerant, an expansion mechanism for recovering mechanical power from the refrigerant expanding, a first motor coupled to the first compression mechanism and the expansion mechanism by a first shaft, and a first closed casing that accommodates the first compression mechanism, the expansion mechanism, and the first motor and has, in a bottom portion thereof, a first oil pool;
a second compressor including a second compression mechanism for compressing the refrigerant, the second compression mechanism being connected in parallel with the first compression mechanism in a refrigerant circuit, a second motor coupled to the second compression mechanism by a second shaft, a second closed casing that accommodates the second compression mechanism and the second motor and has, in a bottom portion thereof, a second oil pool;
a radiator for radiating heat from the refrigerant discharged from the first compression mechanism and the second compression mechanism;
an evaporator for evaporating the refrigerant discharged from the expansion mechanism;
a first pipe for guiding the refrigerant from the first compression mechanism and the second compression mechanism to the radiator;
a second pipe for guiding the refrigerant from the radiator to the expansion mechanism;
a third pipe for guiding the refrigerant from the expansion mechanism to the evaporator;
a bypass passage extending from the second pipe to the third pipe while bypassing the expansion mechanism;
an opening-adjustable bypass valve provided in the bypass passage; and
a controller that shifts, when an oil level of the first oil pool becomes equal to or lower than a specified level, to an oil-equalizing operation in which a rotation speed of the first motor is decreased and a rotation speed of the second motor is increased, and an opening of the bypass valve is increased so that a pressure or a temperature of the discharged refrigerant guided to the radiator through the first pipe is kept approximately constant, and returns the rotation speeds of the first motor and the second motor as well as the opening of the bypass valve to conditions before start of the oil-equalizing operation when a specified period of time has elapsed since the start of the oil-equalizing operation.

2. A refrigeration cycle apparatus comprising:
a first compressor including a first compression mechanism for compressing a refrigerant, an expansion mechanism for recovering mechanical power from the refrigerant expanding, a first motor coupled to the first compression mechanism and the expansion mechanism by a first shaft, and a first closed casing that accommodates the first compression mechanism, the expansion mechanism, and the first motor and has, in a bottom portion thereof, a first oil pool;
a second compressor including a second compression mechanism for compressing the refrigerant connected in parallel with the first compression mechanism in a refrigerant circuit, a second motor coupled to the second compression mechanism by a second shaft, a second closed casing that accommodates the second compression mechanism and the second motor and has, in a bottom portion thereof, a second oil pool;
a radiator for radiating heat from the refrigerant discharged from the first compression mechanism and the second compression mechanism;
a first pipe for guiding the refrigerant from the first compression mechanism and the second compression mechanism to the radiator;
a second pipe for guiding the refrigerant from the radiator to the expansion mechanism;
an injection passage, branched from the second pipe, for supplying additionally the refrigerant to the expansion mechanism in an expansion process;
an opening-adjustable injection valve provided in the injection passage; and
a controller that shifts, when an oil level of the first oil pool becomes equal to or lower than a specified level, to an oil-equalizing operation in which a rotation speed of the first motor is decreased and a rotation speed of the second motor is increased, and an opening of the injection valve is increased so that a pressure or a temperature of the discharged refrigerant guided to the radiator through the first pipe is kept approximately constant, and returns the rotation speeds of the first motor and the second motor as well as the opening of the injection valve to conditions before start of the oil-equalizing operation when a specified period of time has elapsed since the start of the oil-equalizing operation.

3. The refrigeration cycle apparatus according to claim 1 or 2, further comprising an oil level sensor for detecting that the oil level of the first oil pool becomes equal to or lower than the specified level,
wherein the controller shifts to the oil-equalizing operation when the oil level sensor detects that the oil level of the first oil pool becomes equal to or lower than the specified level.

4. The refrigeration cycle apparatus according to claim 1 or 2, wherein the controller determines, at a predetermined interval, that the oil level of the first oil pool becomes equal to or lower than the specified level and shifts to the oil-equalizing operation.

5. The refrigeration cycle apparatus according to any one of claims 1 to 4, further comprising an oil-equalizing pipe that couples the first closed casing to the second closed casing so as to bring the first oil pool into communication with the second oil pool.

6. The refrigeration cycle apparatus according to any one of claims 1 to 5, wherein the expansion mechanism is immersed in the first oil pool, and the first compression mechanism is located above the expansion mechanism.

7. The refrigeration cycle apparatus according to claim 3, wherein the first compressor further includes an oil pump that is disposed between the expansion mechanism and the first compression mechanism, draws an oil of the first oil pool through an oil suction port, and supplies the oil to the first compression mechanism through an oil supply passage provided in the first shaft, and
the specified level is set to be higher than the oil suction port.

8. The refrigeration cycle apparatus according to claim 7, wherein the first motor is disposed between the first compression mechanism and the oil pump.

9. The refrigeration cycle apparatus according to claim 8, wherein the first closed casing is configured such that an internal space above the first oil pool is filled with the refrigerant discharged from the first compression mechanism,
a flow suppressing member for suppressing the oil of the first oil pool from flowing with a flow of the refrigerant in the first closed casing is disposed between the first motor and the oil pump so as to partition a space inside the first closed casing horizontally, and
the oil level sensor is disposed below the flow suppressing member.

10. The refrigeration cycle apparatus according to claim 4, wherein the first compressor further includes an oil pump that is disposed between the expansion mechanism and the first compression mechanism, draws an oil of the first oil pool through an oil suction port, and supplies the oil to the first compression mechanism through an oil supply passage provided in the first shaft, and
the specified level is set to be higher than the oil suction port.

11. The refrigeration cycle apparatus according to claim 10, wherein the first motor is disposed between the first compression mechanism and the oil pump.
